# EUROPÄISCHE PATENTSCHRIFT

(11) **EP 2 028 073 B1**
(45) Veröffentlichungstag und Bekanntmachung des Hinweises auf die Patenterteilung: **19.10.2011**
(21) Anmeldenummer: 08014045.2
(22) Anmeldetag: 06.08.2008
(51) Int. Cl.: B60W 30/16

(54) **Kraftfahrzeug umfassend ein längsführendes Fahrerassistenzsystem mit Stop & Go Funktion**
Propulsion driving-assist system for vehicle including a Stop & Go function
Système d'assistance à la propulsion d'un véhicule avec fonction Stop & Go

(30) Priorität: 21.08.2007 DE 102007039375
(43) Veröffentlichungstag der Anmeldung: 25.02.2009
(73) Patentinhaber: Audi AG, 85045 Ingolstadt (DE)
(72) Erfinder: Limbacher, Reimund, 85055 Ingolstadt (DE)
(74) Vertreter: Thielmann, Frank

(56) Entgegenhaltungen:
- WO-A-2004/007930
- WO-A-2005/061263
- DE-A1-102005 022 676
- DE-A1-102005 045 017
- US-A1- 2005 187 697
- US-A1- 2006 095 194

## Beschreibung

Die Erfindung betrifft ein Kraftfahrzeug umfassend ein es längsführendes Fahrerassistenzsystem mit Stop & Go-Funktion mit einer Erfassungseinrichtung zum Erfassen von Informationen betreffend ein vorausfahrendes Fahrzeug, über welches Fahrerassistenzsystem das Kraftfahrzeug in Abhängigkeit der mittels der Erfassungseinrichtung erfassten Informationen automatisch in den Stand bremsbar und bei Erfassung der erneuten Anfahrt des vorausfahrenden Fahrzeugs in Abhängigkeit eines vom Fahrer über eine Eingabeeinrichtung gebbaren Bestätigungssignals automatisch wieder anfahrbar ist.

Kraftfahrzeuge mit einem solchen längsführenden Fahrerassistenzsystem sind bekannt und bieten den Vorteil, dass der Fahrer beispielsweise im Kolonnenverkehr entlastet wird, nachdem das Fahrzeug automatisch bis in den Stand gebremst werden kann und dort auch im Stand festgebremst gehalten werden kann. Bekannt ist auch, das Fahrzeug automatisch wieder anzufahren, wenn sich das vorausfahrende Fahrzeug in Bewegung gesetzt hat, was über die Erfassungseinrichtung ermittelt wird. Erforderlich hierfür ist nach Erfassen der Anfahrt des vorausfahrenden Fahrzeugs, dass der Fahrer ein über eine Eingabeeinrichtung, beispielsweise einen Bedienhebel, zu gebendes Bestätigungssignal gibt. Hierzu kann beispielsweise der Bedienhebel des ACC-Systems (ACC Adaptiv cruise control) verwendet werden, dort beispielsweise die SET- oder die RESUME-Taste.

Da eine Bediensignalgabe vor Erfassen einer Anfahrt des vorausfahrenden Fahrzeugs nicht berücksichtigt wird, nachdem bei bekannten Systemen stets das Erfassen der Anfahrt des Vorderfahrzeugs erfolgt sein muss, ist der Fahrer stets genötigt, aufmerksam das Vorderfahrzeug zu beobachten. Ist der Fahrer unaufmerksam, so kommt es häufig vor, dass er die Anfahrt des Vorderfahrzeugs erst relativ spät bemerkt, dass also mithin einige Zeit verstreicht, nachdem das Vorderfahrzeug losgefahren ist. Es kommt dann zwangsläufig zu einer großen Lücke im Verkehrsfluss, bis das eigene Fahrzeug automatisch losfährt. Dies ist für die hinteren Fahrzeuge nachteilig, als sich die Kolonne immer weiter verlängert, zum anderen können andere Fahrzeug in die entstandene Lücke einscheren bzw. fühlen sich zum Überholen genötigt, was ebenfalls gefährlich ist.

US 2006/095194 A1 offenbart ein Kraftfahrzeug gemäß dem Oberbegriff des Anspruchs 1. Hieraus ist eine Fahrkontrollvorrichtung bekannt, die zur Verfolgung anderer Kraftfahrzeuge ausgebildet ist. In Abhängigkeit der Betätigung eines Schalters in der Nähe des Lenkrads wird die Kontrollvorrichtung in einen von mehreren Steuerzuständen geschaltet. Nach Betätigung des Schalters wird der Nachfolgesteuerzustand gestartet, falls ein vorausfahrendes Fahrzeug detektiert wird, wobei die Zeit, die zwischen der Betätigung des Schalters oder der Detektion des vorausfahrenden Kraftfahrzeugs vergehen darf, beispielsweise eine Sekunde betragen kann. Eine weitere derartige Zeit ist bekannt, in der, falls das vorausfahrende Kraftfahrzeug nach dem Übergang vom Stop-Haltemodus in den Nachfolgesteuerzustand nicht anfährt, wieder vom Nachfolgesteuerzustand in den Stop-Haltemodus gewechselt wird.

Der Erfindung liegt damit das Problem zugrunde, ein Kraftfahrzeug anzugeben, das eine verbesserte Bedienung des längsführenden Fahrerassistenzsystems zulässt.

Zur Lösung dieses Problems ist erfindungsgemäß ein Kraftfahrzeug mit den Merkmalen des Anspruchs 1 vorgesehen.

Anders als bei bekannten Kraftfahrzeugen ignoriert das Fahrerassistenzsystem, also dessen Steuergerät, ein vor der tatsächlichen Erfassung einer Anfahrt des Vorderfahrzeugs gegebenes Bestätigungssignal nicht, sondern wertet dies als Bestätigungssignal, das eigene Fahrzeug automatisch anzufahren. Dies setzt voraus, dass das Signal innerhalb eines vorbestimmten Zeitintervalls vor der späteren tatsächlichen Erfassung der erneuten Anfahrt des vorausfahrenden Fahrzeugs gegeben wird. Es wird also ein Zeitfenster generiert, das unmittelbar vor dem noch nicht bekannten Erfassungszeitpunkt der Anfahrt des vorausfahrenden Fahrzeugs liegt, mithin also volatil ist.

Für den Fahrer bedeutet dies eine beachtliche Vereinfachung der Bedienung des Fahrerassistenzsystems. Sieht beispielsweise der Fahrer, dass sich ein deutlich weiter vorne stehendes Kraftfahrzeug in der Kolonne in Bewegung setzt, so kann er bereits zu diesem frühen Zeitpunkt das Signal geben. Erfasst nun die fahrzeugeigene Erfassungseinrichtung, dass das Vorderfahrzeug angefahren ist, so wird überprüft, ob das zuvor gegebene Signal noch innerhalb des Zeitfensters, das vom Erfassungszeitpunkt der Anfahrt zurückgerechnet wird, gegeben wurde. Ist dies der Fall, so erfolgt unmittelbar die Anfahrt des eigenen Kraftfahrzeugs. Das eigene Kraftfahrzeug fährt also zu einem optimalen Zeitpunkt los, so dass sich keine Lücke bilden kann, nachdem es sich annähernd gleichzeitig mit dem Vorderfahrzeug in Bewegung setzt. Der Fahrer ist also davon entlastet, dass er das Vorderfahrzeug stets genau beobachtet, um dessen Anfahrt so früh als möglich zu erfassen und wie bisher unmittelbar danach das Bestätigungssignal gibt. Vielmehr hat er je nach Länge des vorbestimmten Zeitintervalls genügend Vorlaufzeit vor der eigentlichen An-fahrterfassung, das Anfahrsignal zu geben. Selbst wenn er nach Gabe dieses Signals kurzzeitig abgelenkt wird oder unaufmerksam ist, erfolgt die zeitoptimierte automatische Anfahrt des eigenen Kraftfahrzeugs, so dass es wie beschrieben nicht zur Lückenbildung mit den daraus resultierenden Problemen kommt. Nur wenn das Signal zu einem Zeitpunkt gegeben wurde, der nach Erfassung der Anfahrt des Vorderfahrzeugs außerhalb, also vor dem Zeitintervall liegt, erfolgt die automatische Anfahrt nicht, es ist dann ein neues Bestätigungssignal erforderlich, was dem Fahrer natürlich über eine entsprechende Anzeigeeinrichtung mitgeteilt wird.

Das Zeitintervall beträgt wenigstens 10 Sekunden. Denkbar ist es aber auch, das Zeitintervall beispielsweise über 30 Sekunden oder sogar 1 Minute zu erstrecken, längere Zeitintervalle sind gleichermaßen denkbar.

In Weiterbildung der Erfindung kann vorgesehen sein, dass bei Gabe eines weiteren Signals über die Eingabeeinrichtung seitens des Fahrers sowohl innerhalb des laufenden Zeitintervalls als auch nach Ablauf des Zeitintervalls dieses jeweils erneut gestartet wird. Gibt der Fahrer also über die Eingabeeinrichtung, beispielsweise den ACC-Bedienhebel, ein erstes Signal, und betätigt er den Hebel beispielsweise nach 5 Sekunde wieder, so wird das Zeitintervall, das beispielsweise 20 Sekunden beträgt, ein erster Mal mit dem ersten Signal gestartet und ein zweites Mal über die gesamte Länge mit Gabe des zweiten Signals gestartet. Auf diese Weise kann also die Vorab-Aktivierung der automatischen Anfahrt verlängert werden. Ist nach Gabe eines ersten Signals das Zeitintervall abgelaufen, ohne dass eine Anfahrt des Vorderfahrzeugs detektiert wurde, und betätigt der Fahrer erneut die Eingabeeinrichtung zur Gabe eines zweiten Signals, so wird mit dessen Gabe ein neues Zeitintervall, das wiederum beispielsweise 20 Sekunden läuft, gestartet. Das heißt, das System ist insgesamt sehr flexibel und bietet dem Fahrer stets die Möglichkeit einer Vorab-Aktivierung.

Um den Fahrer zu unterrichten, dass grundsätzlich die automatische Anfahrt nach Gabe des Signals möglich ist, wenn das durch die Signalgabe gestartete Zeitintervall abgelaufen ist, wird ihm mittels einer optischen oder akustischen Anzeigeeinrichtung eine Information betreffend die mögliche automatische Anfahrt mit Ablauf des Zeitintervalls ausgegeben. Der Fahrer weiß dann, dass sein eigenes Fahrzeug automatisch anfährt, wenn innerhalb des Zeitintervalls die Anfahrt des vorausfahrenden Fahrzeugs erfasst wird. Die gegebene Information erlischt bei optischer Darstellung wieder bzw. wird im Falle einer akustischen Information akustisch widerrufen, wenn das Zeitintervall abgelaufen ist und keine Erfassung der Anfahrt erfolgte.

Eine intuitive und zweckmäßige Informationswiedergabe kann dabei dergestalt sein, dass mittels der Anzeigeeinrichtung die verbleibende Zeit des Zeitintervalls bis zu dessen Ablauf wiedergebbar ist. Es beginnt also quasi eine Art "Count-down" des Zeitintervalls nach Gabe des Signals über die Eingabeeinrichtung, so dass der Fahrer stets darüber informiert ist, wie lange die Vorab-Aktivierung des automatischen Anfahrmodus noch gegeben ist, und ab wann sie erloschen ist. Alternativ oder zusätzlich zur Count-down-Darstellung, im Rahmen welcher beispielsweise die ablaufenden Sekunden am Display angezeigt werden, besteht die Möglichkeit, mittels der Anzeigeeinrichtung eine optische Textanzeige (z. B. "automatisches Anfahren") oder akustische Sprachanzeige in entsprechender Weise betreffend die mögliche automatische Anfahrt wiederzugeben sein. Auch hierüber kann dem Fahrer der momentane Modus mitgeteilt werden.

Weiterhin alternativ oder zusätzlich kann an einer optischen Anzeigeeinrichtung ein die mögliche automatische Anfahrt anzeigendes Symbol dargestellt oder ein vor der Gabe des Signals dargestelltes Symbol veränderbar sein. Denkbar ist also beispielsweise, ein spezielles Symbol, das die Vorab-Aktivierung darstellt, in diesem Fall überhaupt erst anzuzeigen, oder ein bereits dargestelltes Symbol, wie beispielsweise das des grundsätzlich zugeschalteten ACC-Systems (beispielsweise zwei stilisierte Fahrzeugsymbole, die horizontal oder vertikal zueinander angeordnet sind) in einer anderer Farbe oder blinkend oder größer etc. darzustellen. Grundsätzlich ist jedwede Symbolanzeige geeignete, solange sie vom Fahrer erfasst und ihr der entsprechende Informationsgehalt zugeordnet werden kann.

Neben dem Kraftfahrzeug betrifft die Erfindung ferner ein Verfahren zur automatischen Längsführung eines Kraftfahrzeugs mittels eines längsführenden Fahrerassistenzsystems mit Stop & Go-Funktion mit den Merkmalen des Anspruchs 6.

Weitere zweckmäßige Ausgestaltungen des erfindungsgemäßen Verfahrens sind in den abhängigen Unteransprüchen angegeben.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipdarstellung eines erfindungsgemäßen Kraftfahrzeugs, und
- Fig. 2: ein Diagramm zur Darstellung des zeitlichen Ablaufs einer automatischen Wiederanfahrt.

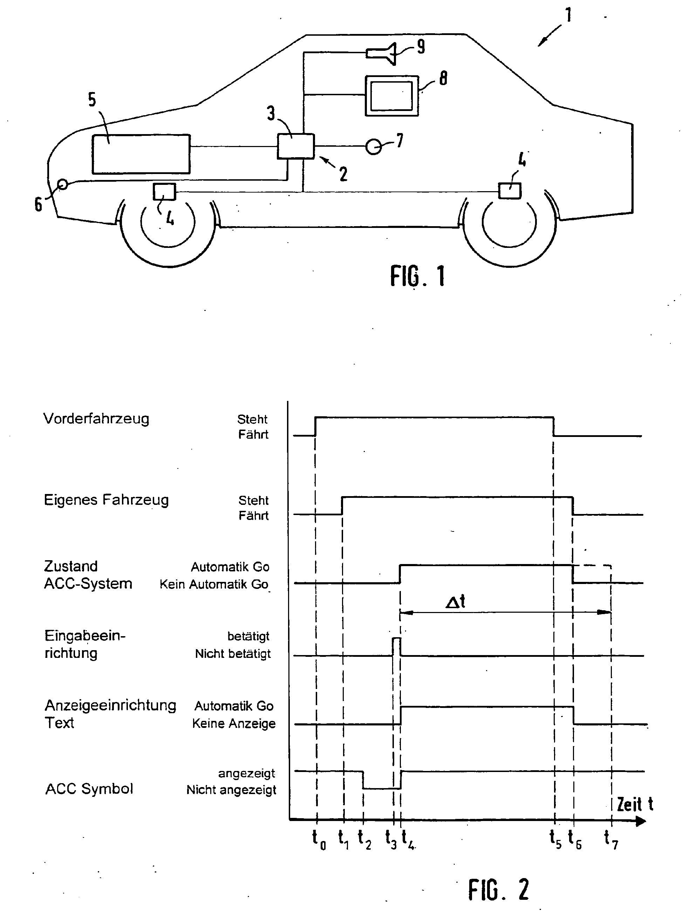

Fig. 1 zeigt ein erfindungsgemäßes Kraftfahrzeug 1, umfassend ein Längsführungssystem 2, beispielsweise in Form eines ACC-Systems, mit einem Steuergerät 3, welches Längsführungssystem 2 in der Lage ist, das Kraftfahrzeug automatisch in den Stand zu bremsen sowie automatisch wieder anzufahren. Diese Möglichkeiten sind exemplarisch dargestellt, indem das Steuergerät 3 mit den Bremseinrichtungen 4 der Vorder- und Hinterräder sowie dem Motor/Getriebe 5 des Fahrzeugs kommuniziert. Selbstverständlich erfolgt hier keine direkte Kommunikation, sondern eine Kommunikation mit den entsprechenden zugeordneten Steuergeräten, was aus Übersichtlichkeitsgründen hier jedoch nicht näher dargestellt ist.

Das Längsführungssystem 2 verfügt über eine Erfassungseinrichtung 6, hier in Form von an der Fahrzeugfront befindlichen Sensoren, z. B. Radar-Sensoren, die das Fahrzeugvorfeld erfassen und Informationen liefern, aus denen seitens des Steuergeräts 3 der Abstand zu einem vorausfahrenden Fahrzeug ermittelt werden kann. Das Steuergerät 3 ist sodann in der Lage, ausgehend von dieser Abstandermittlung zu bestimmen, ob das vorausfahrenden Fahrzeug bremst oder beschleunigt, um dann in entsprechender Weise auch das eigene Kraftfahrzeug 1 entsprechend abzubremsen oder zu beschleunigen, also den Abstand zum vorausfahrenden Fahrzeug zu regeln. Die grundsätzliche Funktionsweise eines solchen ACC-Systems ist hinlänglich bekannt und bedarf keiner näheren Erläuterung.

Vorgesehen ist ferner eine Eingabeeinrichtung 7, z. B. in Form eines Bedienhebels oder einer Taste, welche Eingabeeinrichtung 7 Teil des Längsführungssystems 2 ist. Über diese Eingabeeinrichtung 7 muss der Fahrer zur Ermöglichung einer automatischen Anfahrt des in den Stand gebremsten Kraftfahrzeugs 1 ein Bestätigungssignal geben, um diese automatische Anfahrt zu aktivieren. Dargestellt sind ferner verschiedene Anzeigeeinrichtungen 8 (Anzeigemonitor) und 9 (Lautsprecher oder Lautsprechersystem), über die entsprechende Informationen über den Aktivierungszustand oder den aktivierten Betriebsmodus des Längsführungssystems 2 dem Fahrer mitgeteilt werden können.

Beim erfindungsgemäßen Kraftfahrzeug 1 ist es nun möglich, über die Eingabeeinrichtung 7 ein Signal zu geben, das erst zu einem späteren Zeitpunkt als das die automatische Anfahrt ermöglichende Bestätigungssignal seitens des Steuergeräts 3 gewertet wird, so dass dieses das eigene Kraftfahrzeug unmittelbar mit Erfassen der Anfahrt des vorausfahrenden Fahrzeugs selbst anfahren kann.

Diese Funktionalität ist in Form eines Diagramms in Fig. 2 dargestellt. Längs der Abszisse ist die Zeit aufgetragen, anhand der einzelnen Kurven sind die jeweiligen Betriebsmodi für die unterschiedlichen in das Verfahren eingebundenen Komponenten dargestellt. Dargestellt ist zum einen die Bewegungskurve des Vorderfahrzeugs sowie des eigenen Fahrzeugs, sodann der Zustand des ACC-Systems 2 des eigenen Fahrzeugs, ferner der Betätigungszustand der Eingabeeinrichtung 7 des eigenen Fahrzeugs sowie der etwaigen Informationswiedergaben an im gezeigten Beispiel der Anzeigeeinrichtung 8.

Zu Beginn der Darstellung fährt das Vorderfahrzeug wie auch das eigene Kraftfahrzeug, wobei das Vorderfahrzeug bereits bremst und zum Zeitpunkt t₀ angehalten hat. Das eigene Kraftfahrzeug verzögert noch etwas, bis es zum Zeitpunkt t₁ ebenfalls in den Stillstand gebremst wurde, wobei dies automatisch über das Längsführungssystem 2 erfolgt ist, das den Anhaltevorgang automatisch und abstandsgeregelt gesteuert hat. Zum Zeitpunkt t₁ stehen also beide Fahrzeuge. An der Anzeigeeinrichtung wird, wie in der Kurve zum "ACC-Symbol" dargestellt ist, noch bis zum Zeitpunkt t₂ das ACC-Symbol angezeigt, nachdem das Längsführungssystem 2 noch für eine kurze Nachlaufzeit, hier im Intervall zwischen t₁ und t₂ aktiv ist und ohne Erfordernis eines Bestätigungssignals automatisch die Anfahrt vornimmt. Zum Zeitpunkt t₂ ist jedoch diese Funktionalität des ACC-Längsführungssystems 2 ebenfalls beendet, an der Anzeigeeinrichtung 8 wird das ACC-Symbol nicht mehr länger angezeigt.

Im Zeitpunkt t₃ gibt der Fahrer nun das Signal, das möglicherweise als Bestätigungssignal seitens der Steuerungseinrichtung 3 gewertet wird. Dieses ist im Zeitpunkt t₄, der auch mit dem Zeitpunkt t₃ zusammenfallen kann, seitens des Steuergeräts 3 soweit verarbeitet, als zum einen das ACC-System in einen Vorab-Aktivierungszustand für eine automatische Anfahrt gebracht wird, wie sich der Kurve zum ACC-System entnehmen lässt. Diese ändert sich im Zeitpunkt t₄ von einem ausgeschalteten Automatik-Go-Modus, in dem also keine automatische Anfahrt grundsätzlich möglicht ist, zu einem aktivierten Automatik-Go-Modus. Zeitgleich erfolgt zum Zeitpunkt t₄ eine Textdarstellung an der Anzeigeeinrichtung 8, hier beispielsweise in Form von "Automatic Go", die dem Fahrer angibt, dass er - zumindest für eine vorbestimmte Zeitdauer - den automatischen Anfahrmodus aktiviert hat. In entsprechender Weise wird zum Zeitpunkt t₄ auch das ACC-Symbol wieder angezeigt, nachdem dieses zum Zeitpunkt t₂ wie beschrieben erloschen ist. Grundsätzlich ist also zum Zeitpunkt t₄ das Längsführungssystem 2 aktiviert, wenngleich das Vorderfahrzeug bisher noch nicht wieder angefahren ist.

Mit dem Zeitpunkt t₄ beginnt ein Zeitintervall zu laufen, das in Fig. 2 mit Δt angegeben ist. Dieses Zeitintervall wird durch Betätigung der Eingabeeinrichtung 7 angestoßen und läuft ab dem Zeitpunkt t₄ beispielsweise für 10 Sekunden oder 20 Sekunden, es kann in seiner Länge beliebig konfiguriert werden. Die maximale Länge des Zeitintervalls Δt ist in Fig. 2 mittels der Doppelpfeillinie dargestellt. Wird nun innerhalb dieses Zeitintervalls Δt über die Erfassungseinrichtung 6 erfasst, dass das Vorderfahrzeug anfährt, so wird das zum Zeitpunkt t₃ gegebene bzw. im Zeitpunkt t₄ endgültig verarbeitete Signal als Bestätigungssignal seitens des Steuergeräts 3 verarbeitet, woraufhin unmittelbar die automatische Anfahrt des eigenen Kraftfahrzeugs 1 erfolgt.

Im gezeigten Beispiel erfasst die Sensorik, also die Erfassungseinrichtung 6, zum Zeitpunkt t₅, dass das Vorderfahrzeug wieder anfährt. Der Zeitpunkt t₅ liegt ersichtlich innerhalb des Zeitintervalls Δt, es wird also vor Ablauf der beispielsweise 10 Sekunden oder 20 Sekunden, je nachdem wie das Zeitintervall Δt konfiguriert ist, die Wiederanfahrt erfasst. Dies führt nun dazu, dass das Längsführungssystem 2 auch das eigene Kraftfahrzeug 1 nach Ablauf einer gewissen Zeit, bis sich das Vorderfahrzeug um einen Mindestabstand entfernt hat, auch das eigene Kraftfahrzeug angefahren wir, was im Zeitpunkt t₆ der Fall ist. Gleichzeitig ändert sich auch der Zustand des ACC-Systems, nachdem der automatische Anfahrtbetrieb zum Zeitpunkt t₆ erfolgt ist, von "Automatic Go" zu "Kein Automatic Go". Ebenfalls ändert sich die Anzeige an der Anzeigeeinrichtung 8, indem die Anzeige "Automatic Go" erlischt. Das ACC-Symbol bleibt nach wie vor angezeigt, da das ACC-System während der gesamten Zeit aktiv war und auch weiterhin aktiv bleibt.

Ersichtlich kann also der Fahrer zu einem deutlich früheren Zeitpunkt als dem tatsächlichen Erfassungszeitpunkt der Anfahrt eines vorausfahrenden Fahrzeugs ein Signal geben, das erst nachfolgend in seiner Qualität als Bestätigungssignal verarbeitet wird.

Wie Fig. 2 zeigt, wäre das vorbestimmte Zeitintervall noch länger gelaufen, nämlich insgesamt bis zum Zeitpunkt t₇, was durch die gestrichelte Linie an der Kurve, die den ACC-Systemzustand darstellt, wiedergegeben ist. Wäre nun, anders als in Fig. 2 dargestellt, innerhalb dieses gesamten Zeitintervalls Δt keine Wiederanfahrt des Vorderfahrzeugs erfasst worden, so wäre mit Ablauf des Zeitintervalls zum einen der ACC-Systemzustand von "Automatic Go" auf "Kein Automatic Go" im Zeitpunkt t₇ geändert worden, in entsprechender Weise wäre auch die Textanzeige an der Anzeigeeinrichtung 8 von "Automatic Go" erloschen, auch hätte sich gegebenenfalls zum Zeitpunkt t₇ der ACC-Zustand grundsätzlich geändert, so dass das ACC-Symbol nicht mehr angezeigt worden wäre. Der Fahrer hätte also zu einem späteren Zeitpunkt erneut ein Signal über die Bedieneinrichtung 7 geben müssen, um ein Bestätigungssignal zu generieren und den automatischen Anfahrmodus zu aktivieren.

Sofern er dies innerhalb des Zeitintervalls Δt vornimmt, im gezeigten Beispiel hier also innerhalb des Intervalls t₄ - t₇, so würde dies dazu führen, dass ab diesem Signalgabezeitpunkt das Zeitintervall Δt erneut zu laufen beginnt, mithin also von neuem die 10 Sekunden oder 20 Sekunden je nach Konfiguration der Länge des Zeitintervalls nochmals ablaufen. Erfolgt dann innerhalb des Zeitintervalls die Anfahrtserfassung des Vorderfahrzeugs, verhält sich das System wie in Fig. 2 gezeigt, andernfalls wie zuvor beschrieben.

Abschließend ist festzuhalten, dass der automatische Anfahrvorgang trotz Gabe eines Signals, das nachfolgend in seiner Qualität seitens des Steuergeräts 3 als Bestätigungssignal gewertet wird, nur dann stattfindet, wenn nicht in der Zwischenzeit ein Hindernis, beispielsweise ein Fußgänger oder Fahrradfahrer, im Bereich zwischen dem eigenen Kraftfahrzeug und dem Vorderfahrzeug erfasst wurde. Hierzu kann eine geeignete Überwachungseinrichtung vorgesehen sein, beispielsweise eine hier nicht näher gezeigte Kamera, über die das Vorfeld erfasst wird, und über die mögliche Hindernisse erkannt werden können. Diese Kamera kann beispielsweise direkt mit dem Steuergerät 3 kommunizieren, so dass das Längsführungssystem 2 unmittelbar ein etwaiges Hindernis selbst erfassen kann. Denkbar ist aber auch anstelle einer Kamera andere Sensoren hierfür zu verwenden. In jedem Fall unterbleibt der automatische Anfahrvorgang, solange das Hindernis erfasst wird. Erst wenn das Hindernis nicht mehr vor dem Fahrzeug ist, kann der automatische Anfahrvorgang erfolgen, gegebenenfalls nach erneuter Gabe eines Bestätigungssignals.

## Patentansprüche

1. Kraftfahrzeug umfassend ein es längsführendes Fahrerassistenzsystem mit Stop & Go-Funktion mit einer Erfassungseinrichtung zum Erfassen von Informationen betreffend ein vorausfahrendes Fahrzeug, über welches Fahrerassistenzsystem das Kraftfahrzeug in Abhängigkeit der mittels der Erfassungseinrichtung erfassten Informationen automatisch in den Stand bremsbar und bei Erfassung der erneuten Anfahrt des vorausfahrenden Fahrzeugs in Abhängigkeit eines vom Fahrer über eine Eingabeeinrichtung gebbaren Bestätigungssignals automatisch wieder anfahrbar ist, wobei ein über die Eingabeeinrichtung (7) innerhalb eines vorbestimmten Zeitintervalls (Δt) vor dem Erfassen der erneuten Anfahrt des vorausfahrenden Fahrzeugs gebbares Signal von dem Fahrerassistenzsystem (2) als Bestätigungssignal verarbeitbar ist,
**dadurch gekennzeichnet,**
**dass** das Zeitintervall (Δt) wenigstens 10s beträgt und dass mittels einer optischen oder akustischen Anzeigeeinrichtung (8, 9) eine Information betreffend die mögliche automatische Anfahrt mit Ablauf des Zeitintervalls (Δt) ausgebbar ist.

2. Kraftfahrzeug nach Anspruch 1,
**dadurch gekennzeichnet,**
**dass** bei Gabe eines weiteren Signals sowohl innerhalb des laufenden Zeitintervalls (Δt) als auch nach Ablauf des Zeitintervalls (Δt) dieses erneut gestartet wird.

3. Kraftfahrzeug nach einem der vorangehenden Ansprüche,
**dadurch gekennzeichnet,**
**dass** mittels der Anzeigeeinrichtung (8, 9) die verbleibende Zeit des Zeitintervalls (Δt) bis zu dessen Ablauf wiedergebbar ist.

4. Kraftfahrzeug nach einem der vorangehenden Ansprüche,
**dadurch gekennzeichnet,**
**dass** mittels der Anzeigeeinrichtung (8, 9) eine optische Textanzeige oder eine akustische Sprachanzeige betreffend die mögliche automatische Anfahrt wiedergebbar ist.

5. Kraftfahrzeug nach einem der vorangehenden Ansprüche,
**dadurch gekennzeichnet,**
**dass** an einer optischen Anzeigeeinrichtung (8, 9) ein die mögliche automatische Anfahrt anzeigendes Symbol dargestellt oder ein vor der Gabe des Signals dargestelltes Symbol veränderbar ist.

6. Verfahren zur automatischen Längsführung eines Kraftfahrzeugs mittels eines längsführenden Fahrerassistenzsystems mit Stop & Go-Funktion umfassend eine Erfassungseinrichtung zum Erfassen von Informationen betreffend ein vorausfahrendes Fahrzeug, über welches Fahrerassistenzsystem das Kraftfahrzeug in Abhängigkeit der mittels der Erfassungseinrichtung erfassten Informationen automatisch in den Stand gebremst und bei Erfassung der erneuten Anfahrt des vorausfahrenden Fahrzeugs in Abhängigkeit eines vom Fahrer über eine Eingabeeinrichtung gebbaren Bestätigungssignals automatisch wieder angefahren wird, wobei ein über die Eingabeeinrichtung innerhalb eines vorbestimmten Zeitintervalls vor dem Erfassen der erneuten Anfahrt des vorausfahrenden Fahrzeugs gegebenes Signal von dem Fahrerassistenzsystem als Bestätigungssignal verarbeitet wird und das Fahrzeug mit Erfassen der erneuten Anfahrt des vorausfahrenden Fahrzeugs automatisch angefahren wird,
**dadurch gekennzeichnet,**
**dass** das Zeitintervall wenigstens 10s beträgt und dass dem Fahrer eine optische oder akustische Information betreffend die Möglichkeit einer automatischen Anfahrt infolge der Gabe des Signals bei rechtzeitiger Erfassung der Anfahrt des vorausfahrenden Fahrzeugs gegeben wird.

7. Verfahren nach Anspruch 6,
**dadurch gekennzeichnet,**
**dass** bei Gabe eines weiteren Signals innerhalb des laufenden Zeitintervalls oder nach Ablauf des Zeitintervalls dieses erneut gestartet wird.

8. Verfahren nach Anspruch 6 oder 7,
**dadurch gekennzeichnet,**
**dass** mittels einer optischen oder akustischen Anzeigeeinrichtung der Ablauf des Zeitintervalls nach Gabe des Signals wiedergegeben wird.

9. Verfahren nach einem der Ansprüche 6 bis 8,
**dadurch gekennzeichnet,**
**dass** mittels der Anzeigeeinrichtung eine optische Textanzeige oder eine akustische Sprachanzeige betreffend die mögliche automatische Anfahrt wiedergegeben wird.

10. Verfahren nach einem der Ansprüche 6 bis 9,
**dadurch gekennzeichnet,**
**dass** an einer optischen Anzeigeeinrichtung ein die mögliche automatische Anfahrt anzeigendes Symbol dargestellt oder ein vor der Gabe des Signals dargestelltes Symbol veränderbar ist.

11. Verfahren nach Anspruch 10,
**dadurch gekennzeichnet,**
**dass** das zuvor dargestellte Symbol blinkt oder seine Farbe oder Größe ändert.

## Claims

1. Motor vehicle comprising a longitudinally guiding driver assistance system with a Stop & Go-function with a detection device for detecting information relating to a vehicle which is driving ahead, by means of which driver assistance system the motor vehicle can be braked automatically to a stationary state as a function of the information detected by means of the detection device, and when it is detected that the vehicle driving ahead has started again said motor vehicle can be automatically re-started as a function of a confirmation signal which can be output by the driver via an input device, wherein a signal which can be output by means of the input device (7) within a predetermined time interval (Δt) before it is detected that the vehicle driving ahead has started again can be processed by the driver assistance system (2) as a confirmation signal,
**characterized**
**in that** the time interval (Δt) is at least 10s, and in that information relating to the possible automatic start can be output by means of an optical or acoustic display device (8, 9) when the time interval (Δt) expires.

2. Motor vehicle according to Claim 1,
**characterized**
**in that** when a further signal is output either within the running time interval (Δt) or after expiry of the time interval (Δt), the latter is re-started.

3. Motor vehicle according to one of the preceding claims,
**characterized**
**in that** the remaining time of the time interval (Δt) to the expiry thereof can be represented by means of the display device (8, 9).

4. Motor vehicle according to one of the preceding claims,
**characterized**
**in that** an optical text display or an acoustic voice indication relating to the possible automatic starting can be reproduced by means of the display device (8, 9).

5. Motor vehicle according to one of the preceding claims,
**characterized**
**in that** a symbol which represents the possible automatic start is displayed on an optical display device (8, 9), or a symbol which is displayed before the signal is output, or of a signal which is displayed before the outputting of the signal can be varied.

6. A method for automatically longitudinally guiding a motor vehicle by means of a longitudinally guided driver assistance system having a Stop & Go function comprising a detection device for detecting information relating to a vehicle driving ahead, by means of which driver assistance system the motor vehicle is braked automatically to the stationary state as a function of the information detected by means of the detection device, and when it is detected that the vehicle driving ahead has started again said motor vehicle is automatically re-started as a function of a confirmation signal which can be output by the driver via an input device, wherein a signal which is output by means of the input device within a predetermined time interval before it is detected that the vehicle driving ahead has started again is processed by the driver assistance system as a confirmation signal, and the vehicle is started automatically when it is detected that the vehicle driving ahead starts again,
**characterized**
**in that** the time interval is at least 10s, and that the driver is provided with optical or acoustic information relating to the possibility of automatically starting as a result of the outputting of the signal when the starting of the vehicle driving ahead is detected in good time.

7. Method according to Claim 6,
**characterized**
**in that** when a further signal is output within the running time interval or after the time interval expires, said time interval is started again.

8. Method according to Claim 6 or 7,
**characterized**
**in that** the expiry of the time interval after the signal is output is reproduced by means of an optical or acoustic display device.

9. Method according to one of Claims 6 to 8,
**characterized**
**in that** an optical text display or an acoustic voice display relating to the possible automatic starting is reproduced by means of the display device.

10. Method according to one of Claims 6 to 9,
**characterized**
**in that** a symbol which indicates the possible automatic start is displayed on an optical display device or a symbol which is displayed before the outputting of the signal can be changed.

11. Method according to Claim 10,
**characterized**
**in that** the symbol which has already been displayed flashes or its colour or size changes.

## Revendications

1. Véhicule automobile comprenant un système d'assistance au conducteur de guidage longitudinal de celui-ci avec fonction Stop & Go doté d'un dispositif d'acquisition pour acquérir des informations concernant un véhicule qui précède, système d'assistance au conducteur par le biais duquel le véhicule automobile peut être freiné automatiquement en l'état en fonction des informations acquises au moyen du dispositif d'acquisition et peut être redémarré automatiquement lors de la détection du redémarrage du véhicule qui précède en fonction d'un signal de confirmation pouvant être appliqué par le conducteur par le biais d'un dispositif de saisie, un signal qui peut être appliqué par le biais du dispositif de saisie (7) pendant un intervalle de temps (Δt) prédéfini avant la détection du redémarrage du véhicule qui précède pouvant être traité par le système d'assistance au conducteur (2) comme un signal de confirmation, **caractérisé en ce que** l'intervalle de temps (Δt) est d'au moins 10 s et **en ce qu'**une information concernant le démarrage automatique possible à l'écoulement de l'intervalle de temps (Δt) peut être délivrée au moyen d'un dispositif indicateur (8, 9) visuel ou sonore.

2. Véhicule automobile selon la revendication 1, **caractérisé en ce qu**'en cas d'application d'un signal supplémentaire aussi bien à l'intérieur de l'intervalle de temps (Δt) en cours qu'après écoulement de l'intervalle de temps (Δt), celui-ci redémarre.

3. Véhicule automobile selon l'une des revendications précédentes, **caractérisé en ce que** le temps restant de l'intervalle de temps (Δt) jusqu'à son écoulement peut être reproduit au moyen du dispositif indicateur (8, 9).

4. Véhicule automobile selon l'une des revendications précédentes, **caractérisé en ce qu**'une indication visuelle sous forme de texte ou une indication sonore sous forme de parole concernant le démarrage automatique possible peut être reproduite au moyen du dispositif indicateur (8, 9).

5. Véhicule automobile selon l'une des revendications précédentes, **caractérisé en ce qu**'un symbole indiquant le démarrage automatique possible est représenté ou un symbole représenté avant l'application du signal peut être modifié sur un dispositif indicateur (8, 9) visuel.

6. Procédé de guidage longitudinal automatique d'un véhicule automobile au moyen d'un système d'assistance au conducteur de guidage longitudinal avec fonction Stop & Go comprenant un dispositif d'acquisition pour acquérir des informations concernant un véhicule qui précède, système d'assistance au conducteur par le biais duquel le véhicule automobile peut être freiné automatiquement en l'état en fonction des informations acquises au moyen du dispositif d'acquisition et peut être redémarré automatiquement lors de la détection du redémarrage du véhicule qui précède en fonction d'un signal de confirmation pouvant être appliqué par le conducteur par le biais d'un dispositif de saisie, un signal appliqué par le biais du dispositif de saisie pendant un intervalle de temps prédéfini avant la détection du redémarrage du véhicule qui précède étant traité par le système d'assistance au conducteur comme un signal de confirmation et le véhicule étant démarré automatiquement à la détection du redémarrage du véhicule qui précède, **caractérisé en ce que** l'intervalle de temps est d'au moins 10 s et **en ce qu'**une information visuelle ou sonore concernant le démarrage automatique possible suite à l'application du signal en cas de détection en temps voulu du démarrage du véhicule qui précède est délivrée au conducteur.

7. Procédé selon la revendication 6, **caractérisé en ce qu**'en cas d'application d'un signal supplémentaire à l'intérieur de l'intervalle de temps en cours ou après écoulement de l'intervalle de temps, celui-ci redémarre.

8. Procédé selon la revendication 6 ou 7, **caractérisé en ce que** l'écoulement de l'intervalle de temps après l'application du signal est reproduit au moyen d'un dispositif indicateur visuel ou sonore.

9. Procédé selon l'une des revendications 6 à 8, **caractérisé en ce qu**'une indication visuelle sous forme de texte ou une indication sonore sous forme de parole concernant le démarrage automatique possible est reproduite au moyen du dispositif indicateur.

10. Procédé selon l'une des revendications 6 à 9, **caractérisé en ce qu**'un symbole indiquant le démarrage automatique possible est représenté ou un symbole représenté avant l'application du signal peut être modifié sur un dispositif indicateur visuel.

11. Procédé selon la revendication 10, **caractérisé en ce que** le symbole représenté précédemment clignote ou change de couleur ou de taille.
